# EUROPEAN PATENT SPECIFICATION

(11) **EP 3 603 924 B1**
(45) Date of publication and mention of the grant of the patent: **21.07.2021**
(21) Application number: 18819843.6
(22) Date of filing: 13.06.2018
(51) Int. Cl.: B29C 33/68, B29C 70/34, B29C 37/00, B29C 70/08

(54) **METHOD FOR PRODUCING COMPOSITE MATERIAL STRUCTURE**
VERFAHREN ZUR HERSTELLUNG EINER STRUKTUR AUS VERBUNDSTOFF
PROCÉDÉ DE PRODUCTION D'UNE STRUCTURE DE MATÉRIAU COMPOSITE

(30) Priority: 22.06.2017 JP 2017122372
(43) Date of publication of application: 05.02.2020
(73) Proprietor: Mitsubishi Heavy Industries, Ltd., Chiyoda-ku Tokyo 100-8332 (JP)
(72) Inventor: TAKAHASHI, Yosuke, Tokyo 108-8215 (JP); SUZUKI, Akihito, Tokyo 108-8215 (JP); AKIYAMA, Hiromichi, Tokyo 108-8215 (JP)
(74) Representative: Henkel & Partner mbB
(86) International application number: PCT/JP2018/022538
(87) International publication number: WO 2018/235690

(56) References cited:
- EP-A2- 2 345 528
- WO-A1-00/18555
- WO-A1-93/16856
- WO-A1-2006/070267
- WO-A1-2008/085312
- JP-A- 2003 053 754
- JP-A- 2010 208 104
- JP-A- 2011 230 320
- JP-A- 2012 218 257
- JP-A- 2012 218 257
- JP-A- 2015 534 913
- US-A1- 2015 266 276

## Description

### Technical Field

The present invention relates to a method for producing a composite material structure.

### Background Art

In the related art, there is known the autoclave molding in which a composite material containing resin is heated under high pressure when a configuration component of an aircraft, an industrial machine, or the like. The autoclave molding is performed by an autoclave in which high-pressure and high-temperature gas circulates internally. The composite material along with a mold or jig is disposed inside the autoclave which is a pressure container, and a molded article is formed.

In the autoclave molding, a mold release film is used to improve mold release properties when the molded article is removed from the mold or jig after the molding has been completed. For example, PTL 1 describes a mold release film having a mold release layer containing silica as a main component. Silica is obtained by the hydrolysis and condensation reaction of a polyalkoxysiloxane having a very low volatility among alkylsilanes which are organosilanes. An alkylsilane with a low molecular weight or a cyclic siloxane with a low molecular weight forming the mold release layer prevents the mold release film of PTL 1 from being transferred onto a mold release surface of the molded article.

The well known process of painting a composite part is illustrated in documents WO 93/16856, WO 2006/070267, WO 2008/085312 and EP 2 345 528 and the process of manufacturing a composite part including the application of release layer on the surface of the mould is illustrated in documents JP2012-218257 and WO 00/18555, said documents further disclosing the use of a release layer mainly based on 4-methyl-1-pentene copolymer.

### Citation List

### Patent Literature

[PTL 1] Japanese Unexamined Patent Application Publication No. 2013-91278 A

### Summary of Invention

### Technical Problem

When the molded article is painted after the molding has been completed, in order to improve the adhesion of a paint, a worker performs sanding on a surface of the molded article before painting is performed. However, depending on the shape of the molded article, it may be difficult to bring a sand paper or the like into contact with the surface, and there is a potential for deterioration in sanding workability. In addition, depending on the workmanship of the worker, there is a potential for the occurrence of variations in the quality of each product. For this reason, it is desirable to improve the adhesion of the paint to the surface of the molded article without performing an aftertreatment such as sanding.

The present invention provides a method for producing a composite material structure capable of improving the adhesion of a paint to a surface of a molded article. Solution to Problem

The present invention is disclosed according to the subject-matter of the independent method claim 1.

Further embodiments are disclosed in the dependent claims.

The inventors and the like have repeated various experiments and examinations to solve the above-mentioned problem, and as a result, have found that if the fluorine component is transferred onto a mold release surface of the molded article and remains thereon, the adhesion of a paint deteriorates. In contrast, according to the production method, the fluorine content of the protective film is less than or equal to 0.1%. For this reason, it is possible to prevent the fluorine component from being transferred onto the mold release surface of the molded article. It is possible to improve the adhesion of the paint to the surface of the molded article by preventing the transfer of the fluorine component.

In addition, in the method for producing a composite material structure according to a second aspect of the present invention, in the first aspect, the protective film may be a heat-resistance mold release film containing 95% or more of a 4-Methyl-1-pentene/α-olefin copolymer.

In addition, in the method for producing a composite material structure according to a third aspect of the present invention, in the first aspect, the protective film may be a heat-resistance mold release film containing a thermoplastic elastomer in which a mold release layer is established by a plasma treatment.

In addition, in the method for producing a composite material structure according to a fourth aspect of the present invention, in any one of the first to third aspects, the molding member may be a molding jig forming a hollow portion inside the molded article, and in the molding step, molding is performed in a state where the composite material is disposed so as to surround the molding member.

Even though similar to the hollow portion, a portion has a surface which is difficult to process with an aftertreatment, it is possible to improve the adhesion of the paint by employing the above-mentioned configuration.

### Advantageous Effects of Invention

According to the present invention, it is possible to improve the adhesion of the paint to the surface of the molded article.

### Brief Description of Drawings

Fig. 1 is a cross-sectional view of a composite material structure according to an embodiment of the present invention.
Fig. 2 is a flowchart illustrating a method for producing a composite material structure according to the embodiment of the present invention.
Fig. 3 is a graph showing results of surface element analyses performed by XPS at verification tests of the embodiment of the present invention.
Fig. 4 is a tape test result of a test specimen of a first film at a verification test of the embodiment of the present invention.
Fig. 5 is a tape test result of a test specimen of a second film at a verification test of the embodiment of the present invention.

### Description of Embodiments

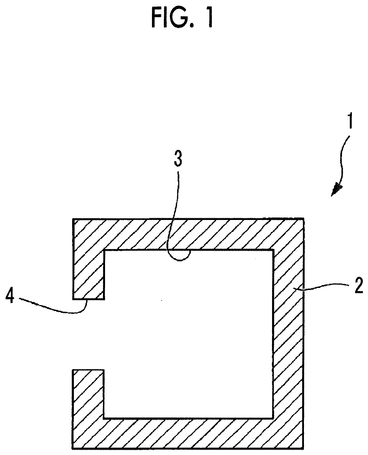

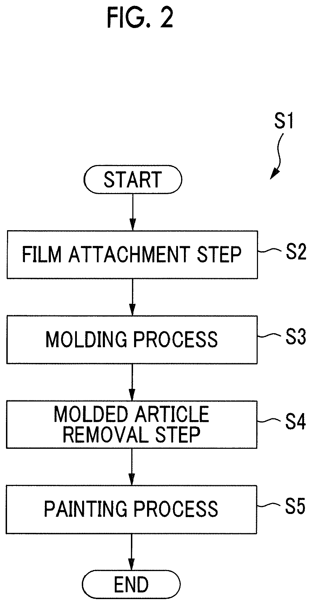

Hereinbelow, an embodiment of the present invention will be described with reference to Figs. 1 and 2.
In a method S1 for producing a composite material structure, a composite material structure 1 useable as a product is produced from a composite material. The composite material structure 1 is a structure forming, for example, an airframe of an aircraft, and is applied to a main wing, tail wing, fuselage, or the like. As illustrated in Fig. 1, the composite material structure 1 produced in the embodiment is an elongated component having a hollow portion 3 thereinside. An opening 4 is formed in one side of the composite material structure 1. The composite material structure 1 of the embodiment is a component obtained by performing painting on a surface of a molded article 2.

The composite material of the embodiment is a laminated material having, for example, carbon fiber reinforced plastic (CFRP). Note that the composite material is not limited to having a structure having CFRP as in the embodiment, and may have a structure where metallic materials or resin materials are laminated together.

As illustrated in Fig. 2, the method S1 for producing a composite material structure of the embodiment contains a film attachment step S2, a molding step S3, a molded article removal step S4, and a painting step S5.

In the film attachment step S2, a protective film is attached to a molding member. In the film attachment step S2, the protective film is wound around the molding member so as to completely cover the molding member. Specifically, the protective film is attached to the molding member such that the molding member does not come into direct contact with the composite material in the molding step S3 to be described later.

The molding member is a component for autoclave molding for forming the molded article 2 into a desired shape when molding is performed. The molding member of the embodiment is a bladder (molding jig) for forming the hollow portion 3 inside the molded article 2. The bladder is capable of supporting an inner surface of the molded article 2 such that the hollow portion 3 has a desired shape when molding is performed.

The protective film is a heat-resistance mold release film having a fluorine F content of less than 0.1%. The fluorine F content is preferably less than 0.05%, more preferably less than 0.01%. Therefore, the protective film most preferably does not contain fluorine F. Herein, for the sake of convenience, the fact that the fluorine F is not contained implies that when the surface of the molded article 2 molded using the protective film is surface analyzed by XPS, the fluorine F content is an undetectable content. In addition, content is the amount of a component contained per unit amount, and is expressed by, for example, an element ratio. The fluorine F is fluorine resin contained in the film.

The protective film used in the embodiment is a heat-resistance mold release film containing 95% or more of the 4-Methyl-1-pentene/α-olefin copolymer. Note that the protective film preferably is a heat-resistance mold release film containing 99% or more of the 4-Methyl-1-pentene/α-olefin copolymer. In addition, the protective film may be a heat-resistance mold release film containing a thermoplastic elastomer in which a mold release layer is established by a plasma treatment.

In the molding step S3, the composite material which is a heating target is attached to the molding member from above the protective film. In the molding step S3, the composite material along with the molding member is accommodated in a pressure container, and the molded article 2 is molded. In the molding step S3, the composite material is disposed so as to surround the molding member, and the hollow portion 3 is formed inside the molded article 2. In the embodiment, an autoclave is used as the pressure container. Therefore, in the molding step S3 of the embodiment, autoclave molding, namely, a high pressure heat treatment is applied to the molding material inside the autoclave. When the autoclave molding is applied, gas is supplied into the pressure container, and the inner state of the pressure container becomes a high pressure state. Heated high-pressure gas is fed into the pressure container, and thus the composite material is heated. High-temperature gas is continuously supplied to the composite material, and the high pressure heat treatment on the composite material is being progressed. At that time, the composite materials laminated in multiple layers are deformed and cured, and thus the composite materials become denatured into the molded article 2. At that time, in the embodiment, the hollow portion 3 having a desired shape is formed inside the molded article 2 by the molding member. For this reason, in the molding step S3, the high pressure heat treatment is performed in a state where the inner surface forming the hollow portion 3 is in contact with the protective film.

In the molded article removal step S4, the molded article 2 is removed from the molding member to which the protective film is attached. In the molded article removal step S4 of the embodiment, after the molding step S3 has ended, the molded article 2 along with the molding member is carried out from the autoclave. Thereafter, the molded article 2 which is mold released from the protective film is obtained by removing the molded article 2 from the molding member.

In the painting step S5, painting is performed on the surface of the molded article 2. In the painting step S5, the painting is performed on the inner surface of the molded article 2, which forms the hollow portion 3 and serves as the surface of the molded article 2. At that time, in the painting step S5 of the embodiment, the inner surface of the molded article 2 is directly painted without performing an aftertreatment such as sanding thereon. Therefore, the composite material structure 1 is obtained.

According to the method S1 for producing a composite material structure described above, the fluorine F content of the protective film is less than or equal to 0.1%. For this reason, it is possible to prevent the fluorine F from being transferred onto a mold release surface of the molded article 2, which is in contact with the mold release film when molding is performed. Herein, the inventors and the like have repeated various experiments and examinations, and as a result, have found that if the fluorine F is transferred onto the mold release surface and remains thereon, the adhesion of a paint deteriorates. For this reason, the protective film having a fluorine F content of 0.1% or less is to be used, and thus it is possible to prevent the fluorine F from being transferred onto the mold release surface of the molded article 2, which is in contact with the mold release film when molding is performed, and to improve the adhesion of the paint. For this reason, it is possible to improve the adhesion of the paint without performing an aftertreatment such as sanding on the surface of the molded article 2.

In addition, a mold release film used as the protective film is a heat-resistance mold release film containing 95% or more of the 4-Methyl-1-pentene/α-olefin copolymer, or a heat-resistance mold release film containing a thermoplastic elastomer in which a mold release layer is established by a plasma treatment. Therefore, it is possible to more reliably improve the adhesion of the paint without performing an aftertreatment such as sanding on the surface of the molded article 2.

The point that the adhesion of the paint is improved by using the protective film of the embodiment will be described with reference to verification tests performed to verify the effectiveness of the present invention.

A first film, a second film, and a comparative film were used as protective film used at the verification tests. Herein, the first film refers to the heat-resistance mold release film of the embodiment containing 95% or more of the 4-Methyl-1-pentene/α-olefin copolymer. In addition, the second film refers to the heat-resistance mold release film of the embodiment containing a thermoplastic elastomer in which a mold release layer is established by a plasma treatment. In addition, the comparative film as a comparison target refers to a heat-resistance mold release film containing 0.1% or more of the fluorine F.

Each test specimen to which each film was attached was cured by the high pressure heat treatment so as to simulate the molded article 2 molded using each film. Specifically, each test specimen was formed of a CFRP forming a plate. Each test specimen was sized of, for example, 305 mm x 305 mm x 1.5 mm. Each test specimen had a structure where two sheets of CFRPs, each of which had a laminate configuration of [0/90/90/0], overlapped each other to form eight layers. In addition, curing conditions, namely, a temperature of 185°C, a pressure of 0.58 MPa to 0.69 MPa, and a temperature rising speed of 0.5 °C/min, were maintained for 4 to 4.5 hours. A surface analysis test and a tape test as verification tests were performed on each test specimen cured under such conditions.

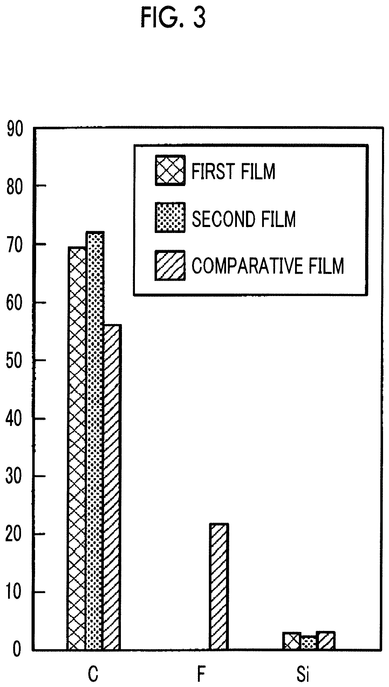

Firstly, the X-ray photoelectron spectroscopy (XPS) as the surface analysis was performed. Fig. 3 illustrates results of surface element analyses of the test specimens performed by the XPS. As illustrated in Fig. 3, the fluorine F was not detected from a surface of each of the test specimens prepared using the first film and the second film. However, the fluorine F was detected from a surface of the test specimen prepared using the comparative film. Therefore, it could be verified that the fluorine F was not transferred onto the surface of each of the test specimens prepared using the first film and the second film.

In addition, from the results of the surface element analyses performed by the XPS, it could be verified that compared to the comparative film, there was no large difference in the amount of transfer between hydrocarbon CH and silicon Si in each film which were mold release components. Note that even though the time-of-flight secondary ion mass spectrometry (TOF-SIMS) was performed as a surface analysis, compared to the comparative film, there was no large difference in the amount of transfer between the hydrocarbon CH and the silicon Si in each film which were mold release components. Therefore, it could be verified that when the first film or the second film was used, compared to when the comparative film was used, the mold release component such as the hydrocarbon CH or the silicon Si also was not much transferred onto the surface of each test specimen.

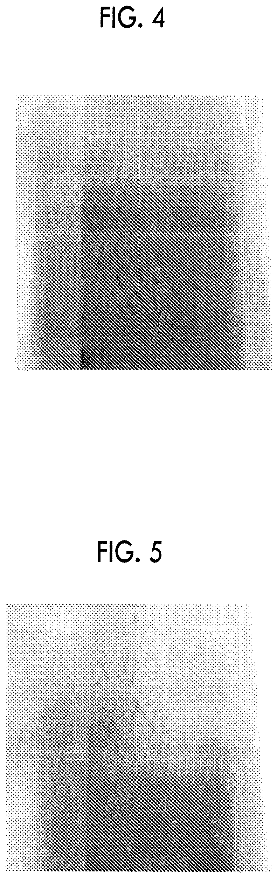

In addition, based on the cross cut method, lattice pattern scratches were provided on the surface of each test specimen painted with a primer (paint) and cured, and the tape test was performed. Figs. 4 and 5 illustrate the tape test results. Fig. 4 illustrates a tape test result when the first film was used. Fig. 5 illustrates a tape test result when the second film was used. From the results, it could be verified that when the first film or the second film was used, the primer did not delaminate from the surface of the test specimen.

Therefore, from the results of the verification tests, it is understood that when the first film or the second film preventing the fluorine F from being transferred onto the surface of the molded article 2 is used, the adhesion of the paint to the surface of the molded article 2 improves.

In addition, the hollow portion 3 is formed using the bladder around which the protective film is wound. Therefore, it is possible to improve the adhesion of the paint to a portion such as an inner surface of the hollow portion 3 on which it is difficult to perform an aftertreatment such as sanding.

### (Other Modification Examples of Embodiment)

The embodiment of the present invention has been described above in detail with reference to the drawings, and the configurations, combinations of the configurations, and the like in the embodiment are merely examples. Additions, omissions, substitutions, and other changes can be made to the configurations without departing from the concept of the present invention. In addition, the present invention is not limited by the embodiment, but is limited only by the claims.

Note that the molding member is not limited to a jig such as the bladder of the embodiment which is used when molding is performed, but may be a mold which is accommodated in the pressure container and forms an outer diameter of the molded article 2.

### Industrial Applicability

According to the present invention, it is possible to improve the adhesion of the paint to the surface of the molded article.

### Reference Signs List

S1: method for producing composite material structure
1: composite material structure
2: molded article
3: hollow portion
4: opening
S2: film attachment step
S3: molding step
S4: molded article removal step
S5: painting step
F: fluorine component
CH: hydrocarbon
Si: silicon

## Claims

1. (amended) A method for producing a composite material structure, the method comprising:
a film attachment step of attaching a protective film to a molding member;
a molding step of attaching a composite material which is a heating target to the molding member from above the protective film, accommodating the molding member in a pressure container, and molding a molded article;
a molded article removal step of removing the molded article from the molding member to which the protective film is attached; and
a painting step of directly painting a surface of the molded article which is mold released from the protective film, without performing sanding on the surface,
wherein the protective film is a heat-resistance mold release film having a fluorine content of less than 0.1%.

2. The method for producing a composite material structure according to claim 1,
wherein the protective film is a heat-resistance mold release film containing 95% or more of a 4-Methyl-1-pentene/α-olefin copolymer.

3. The method for producing a composite material structure according to claim 1,
wherein the protective film is a heat-resistance mold release film containing a thermoplastic elastomer in which a mold release layer is established by a plasma treatment.

4. The method for producing a composite material structure according to any one of claims 1 to 3,
wherein the molding member is a molding jig forming a hollow portion inside the molded article, and
wherein in the molding step, molding is performed in a state where the composite material is disposed so as to surround the molding member.

## Patentansprüche

1. Verfahren zur Herstellung einer Verbundmaterialstruktur, wobei das Verfahren umfasst:
einen Folienanbringungsschritt in Form des Anbringens einer Schutzfolie an ein Formgebungselement;
einen Formgebungsschritt in Form des Anbringens eines Verbundmaterials, bei welchem es sich um ein zu erwärmendes Objekt handelt, an das Formgebungselement von oberhalb der Schutzfolie, des Aufnehmens des Formgebungselements in einen Druckbehälter, sowie des Formens eines Formteils;
einen Formteilentnahmeschritt in Form des Entfernens des Formteils aus dem Formgebungselement, an welches die Schutzfolie angebracht ist; und
einen Anstrichschritt in Form des direkten Streichens einer Oberfläche des von der Schutzfolie befreiten Formteils ohne Schleifen der Oberfläche,
wobei es sich bei der Schutzfolie um eine wärmebeständige Formtrennfolie mit einem Fluorgehalt von weniger als 0.1 % handelt.

2. Verfahren zur Herstellung einer Verbundmaterialstruktur gemäß Anspruch 1,
wobei es sich bei der Schutzfolie um eine wärmebeständige Formtrennfolie handelt, welche 95% oder mehr an einem 4-Methyl-1-penten/α-Olefin-Copolymer enthält.

3. Verfahren zur Herstellung einer Verbundmaterialstruktur gemäß Anspruch 1,
wobei es sich bei der Schutzfolie um eine wärmebeständige Formtrennfolie handelt, welche ein thermoplastisches Elastomer enthält und in welcher mittels Plasmabehandlung eine Formtrennschicht gebildet wird.

4. Verfahren zur Herstellung einer Verbundmaterialstruktur gemäß einem der Ansprüche 1 bis 3,
wobei es sich bei dem Formgebungselement um ein Formwerkzeug handelt, welches im Inneren des Formteils einen Hohlabschnitt ausbildet, und
wobei das Formen im Rahmen des Formgebungsschritts in einem Zustand durchgeführt wird, in welchem das Verbundmaterial das Formgebungselement umgibt.

## Revendications

1. Procédé pour produire une structure de matériau composite, le procédé comprenant :
une première étape d'attachement de pellicule consistant à attacher une pellicule protectrice à un élément de moulage ;
une étape de moulage consistant à attacher un matériau composite qui est une cible de chauffage à l'élément de moulage depuis le dessus de la pellicule protectrice, à placer l'élément de moulage dans un récipient sous pression, et à mouler un article moulé ;
une étape de retrait d'article moulé consistant à retirer l'article moulé de l'élément de moulage auquel la pellicule protectrice est attachée ; et
une étape de peinture consistant à peindre directement une surface de l'article moulé qui est démoulé de la pellicule protectrice, sans mise en œuvre d'un sablage sur la surface,
dans lequel la pellicule protectrice est une pellicule de démoulage résistant à la chaleur ayant une teneur en fluor inférieure à 0,1 %.

2. Procédé pour produire une structure de matériau composite selon la revendication 1, dans lequel la pellicule protectrice est une pellicule de démoulage résistant à la chaleur contenant 95 % ou plus d'un copolymère de 4-méthyl-1-pentène/α-oléfine.

3. Procédé pour produire une structure de matériau composite selon la revendication 1, dans lequel la pellicule protectrice est une pellicule de démoulage résistant à la chaleur, contenant un élastomère thermoplastique dans lequel une couche de démoulage est établie par un traitement au plasma.

4. Procédé pour produire une structure de matériau composite selon l'une quelconque des revendications 1 à 3,
dans lequel l'élément de moulage est un gabarit de moulage formant une partie creuse à l'intérieur de l'article moulé, et
dans lequel, dans l'étape de moulage, le moulage est effectué dans un état où le matériau composite est disposé de façon à entourer l'élément de moulage.
